# EUROPÄISCHE PATENTANMELDUNG

(11) **EP 4 733 255 A1**
(43) Veröffentlichungstag der Anmeldung: **29.04.2026**
(21) Anmeldenummer: 24208301.2
(22) Anmeldetag: 23.10.2024
(51) Int. Cl.: C01B 32/354

(54) **EINE OBERFLÄCHENAUSSTATTUNG MIT SILBER UND RUTHENIUM AUFWEISENDE AKTIVKOHLEKÖRPER**

(71) Anmelder: Heraeus Precious Metals GmbH & Co. KG, 63450 Hanau (DE)
(72) Erfinder: Dr. Schwob, Tobias, 6345 Hanau (DE); Kovjenic, Milena, 63450 Hanau (DE); Winter, Kevin, 63450 Hanau (DE); Fritz, Maximilian, 63450 Hanau (DE); Lässig, Walter, 63450 Hanau (DE); Dr. Gock, Michael, 63450 Hanau (DE)
(74) Vertreter: Heraeus IP

(57) **Zusammenfassung**

Aktivkohlekörper aufweisend (i) eine Oberflächenausstattung mit Silber und Ruthenium und (ii) eine in Richtung der größten Längsausdehnung verlaufende absolute Körpergröße im Bereich von 400 bis 50000 µm, und Verfahren zu ihrer Herstellung.

## Beschreibung

Die Erfindung betrifft Aktivkohlekörper, welche eine Oberflächenausstattung mit den Edelmetallen Silber und Ruthenium aufweisen, Verfahren zur Herstellung solcher Aktivkohlekörper und deren Verwendung.

Unter anderem zur Verwendung bei der Wasserfiltration geeignete mit antimikrobiell wirksamem Silber ausgestattete Aktivkohle, jedoch ohne Ausstattung mit von Silber verschiedenem Edelmetall, ist Stand der Technik; allerdings verbraucht sich die antimikrobielle Wirkung mit der Zeit.

WO 2023/160837 A1 offenbart ein demgegenüber verbessertes mit metallischem Silber und metallischem Ruthenium ausgestattetes partikelförmiges Kohlenstoffmaterial mit einer durchschnittlichen Teilchengröße (d50) im Bereich von 0,5 bis 500 µm, einem Porenvolumen im Bereich von 0,5 bis 10 mL/g und einer BET-Oberfläche im Bereich von 200 bis 2000 m²/g. WO 2023/160837 A1 offenbart ferner ein nur als diskontinuierliches Batch-Verfahren durchführbares Verfahren zur Herstellung dieses Materials, umfassend die Schritte: Reduzieren mindestens eines Silbervorläufers und mindestens eines Rutheniumvorläufers in Gegenwart wässrig suspendierter Kohlepartikel, insbesondere Aktivkohlepartikel, Abtrennen des im Zuge der Reduktion gebildeten Feststoffs von der wässrigen Phase, gegebenenfalls Waschen des abgetrennten Feststoffs mit Wasser und gegebenenfalls Trocknen des abgetrennten und gegebenenfalls gewaschenen Feststoffs. Das Material kann unter anderem Verwendung finden als Additiv zur antimikrobiellen Ausrüstung von mit Aktivkohle ausgestatteten oder auf Aktivkohle basierenden Produkten, von zur Luft- oder Wasserreinigung einsetzbaren Aktivkohlefiltern und von Aktivkohlefilter umfassenden Produkten.

Beispielsweise im Hinblick auf die Filtration keimbelasteter wässriger Medien im größeren Maßstab hat sich das aus WO 2023/160837 A1 bekannte mit metallischem Silber und metallischem Ruthenium ausgestattete partikelförmige Kohlenstoffmaterial als verbesserungsbedürftig erwiesen. Das aus WO 2023/160837 A1 bekannte Verfahren erlaubt es nicht, grobkörnige mit Silber und Ruthenium ausgestattete Aktivkohle herzustellen.

Die Erfindung löst die beschriebene Problematik durch Bereitstellung von Aktivkohlekörpern aufweisend (i) eine Oberflächenausstattung mit Silber und Ruthenium und (ii) eine in Richtung der größten Längsausdehnung verlaufende absolute Körpergröße im Bereich von 400 bis 50000 µm, bevorzugt 500 bis 20000 µm, insbesondere >500 bis 10000 µm.

Die absolute Körpergröße der Aktivkohlekörper kann abhängig von der Größenordnung durch mikroskopische oder visuelle Analyse einer statistisch signifikanten Anzahl von Aktivkohlekörpern bestimmt werden, z.B. einer Anzahl im Bereich von bis zu 1000, beispielsweise mit Kamera- und Auswertesoftware-Unterstützung.

Die erfindungsgemäßen Aktivkohlekörper können eine einem Aspektverhältnis im Bereich von 0,1 bis 1, entsprechende Körperform aufweisen. Das Aspektverhältnis ist der Quotient aus der kleinsten und der größten linearen Abmessung der Aktivkohlekörper, d.h. ein Aspektverhältnis von 1,0 bedeutet hier perfekte Aktivkohlekugeln. Das Aspektverhältnis bzw. die Körperform der Aktivkohlekörper kann abhängig von der Größenordnung der absoluten Körpergröße durch mikroskopische oder visuelle Analyse einer statistisch signifikanten Anzahl von Aktivkohlekörpern bestimmt werden, z.B. einer Anzahl im Bereich von bis zu 1000, beispielsweise mit Kamera- und Auswertesoftware-Unterstützung.

Der hierin verwendete Begriff "Oberflächenausstattung mit Silber und Ruthenium" bedeutet, dass die Silber- und Rutheniumkonzentration auf der äußeren Oberfläche der erfindungsgemäßen Aktivkohlekörper am höchsten ist und einen nur geringfügig in deren Inneres hineinreichenden und dabei bis zur Nachweisgrenze (Nichtnachweisbarkeit) abnehmenden Gradienten aufweist. Besagter Konzentrationsgradient reicht beispielsweise nicht tiefer als bis zu 50 µm ins Innere der erfindungsgemäßen Aktivkohlekörper hinein. Eine Kombination aus REM (Rasterelektronenmikroskopie) und fokussiertem lonenstrahl (FIB) an parallel zur größten Längsausdehnung vorgenommenen Querschnitten der erfindungsgemäßen Aktivkohlekörper ist eine geeignete Methode zur Untersuchung des Konzentrationsgradienten. Für den Fachmann erschließt sich somit, der größte Anteil des Inneren der erfindungsgemäßen eine Oberflächenausstattung mit Silber und Ruthenium aufweisenden Aktivkohlekörper ist edelmetallfrei, insbesondere frei von Silber und Ruthenium. Dies sei am Beispiel eines kugelförmigen Aktivkohleformkörpers mit einem Durchmesser von 1000 µm erläutert. Bei diesem Beispiel versteht der Fachmann einen Aufbau aus einer edelmetallfreien, insbesondere von Silber und Ruthenium freien Aktivkohlekugel mit einem Durchmesser von 900 µm vollständig umgeben von einer 50 µm dicken Aktivkohleschicht, wobei letztere einen maximal 50 µm ins Kugelinnere weisenden von außen nach innen abnehmenden Silber- plus Ruthenium-Konzentrationsgradienten aufweist. Allgemeiner gesagt, unterhalb einer äußeren maximal 50 µm dicken und einen von außen nach innen abnehmenden Silber- plus Ruthenium-Konzentrationsgradienten aufweisenden Hüllschicht ist das weitere Innere der erfindungsgemäßen eine Oberflächenausstattung mit Silber und Ruthenium aufweisenden Aktivkohlekörper frei von Edelmetall, insbesondere frei von Silber und Ruthenium.

Die erfindungsgemäßen eine Oberflächenausstattung mit Silber und Ruthenium aufweisenden Aktivkohlekörper bestehen einerseits aus Aktivkohle als Trägermaterial für die Oberflächenausstattung und andererseits aus den die Oberflächenausstattung mit Silber und Ruthenium bildenden Silberspezies und Rutheniumspezies. Die Silberspezies umfassen metallisches Silber und/oder Silberoxid (Ag₂O) und die Rutheniumspezies können insbesondere metallisches Ruthenium und/oder Rutheniumoxid (RuO₂) umfassen.

Bei der das Trägermaterial der erfindungsgemäßen Aktivkohlekörper bildenden Aktivkohle kann es sich um Aktivkohle verschiedener Art handeln, beispielsweise pyrolytisch erzeugte Aktivkohle und dabei insbesondere solche aus natürlichen Quellen wie Holz, Torf, Obstschalen, Walnussschalen, Aprikosenschalen, Dattelschalen, Kokosnussschalen und dergleichen.

Hierin wird der Begriff "Aktivkohlekörper" sowohl mit Bezug auf die erfindungsgemäßen Aktivkohlekörper als auch mit Bezug auf die ursprünglichen Aktivkohlekörper ohne Oberflächenausstattung mit Silber und Ruthenium verwendet; dabei handelt es sich jeweils weder um Kohlenstoffnanoröhren (englisch: carbon nanotubes) noch um Kohlenstoffnanofasern (englisch: carbon nanofibers).

Die Aktivkohlekörper als solche, d.h. die ursprünglichen Aktivkohlekörper ohne Oberflächenausstattung mit Silber und Ruthenium sind nicht nur frei von Silber und Ruthenium, sondern generell edelmetallfrei, d.h. nicht bewusst mit Edelmetall ausgestattet, insbesondere dabei ausdrücklich weder mit Silber noch mit Ruthenium ausgestattet. Die ursprünglichen Aktivkohlekörper unterscheiden sich weder hinsichtlich ihrer absoluten Körpergröße noch hinsichtlich Teilchenform und Aspektverhältnis von den erfindungsgemäßen eine Oberflächenausstattung mit Silber und Ruthenium aufweisenden Aktivkohlekörpern. Die ursprünglichen edelmetallfreien Aktivkohlekörper können im Zuge des in der weiteren Folge beschriebenen erfindungsgemäßen Verfahrens in die erfindungsgemäßen eine Oberflächenausstattung mit Silber und Ruthenium aufweisenden Aktivkohlekörper überführt werden. Es kann sich bei den ursprünglichen edelmetallfreien Aktivkohlekörpern um an sich bekannte Aktivkohlegranalien oder Formkörper aus Aktivkohle, beispielsweise Stäbchen, Zylinder, Kugeln, Würfel, etc. aus Aktivkohle handeln, keinesfalls jedoch um pulverförmige Aktivkohle beispielsweise im Partikelgrößenbereich respektive mit einer Partikelgrößenverteilung wie beispielsweise in WO 2023/160837 A1 offenbart. Die ursprünglichen edelmetallfreien Aktivkohlekörper können beispielsweise durch Granulierung oder Extrusion hergestellt worden sein. Beispiele für im Handel erhältliche edelmetallfreie Aktivkohlekörper umfassen Norit^{®} GCN 830 (Cabot Corporation), Silcarbon K835 (Silcarbon Aktivkohle GmbH), DGK 4x8/60 (CarboTech AC GmbH) und Alcarbon^{®} K55/18x40 (Donau Carbon).

Sowohl die ursprünglichen edelmetallfreien als auch die erfindungsgemäßen eine Oberflächenausstattung mit Silber und Ruthenium aufweisenden Aktivkohlekörper weisen das vorerwähnte Merkmal (ii) auf. Mit anderen Worten, die Oberflächenausstattung mit Silber und Ruthenium hat keinen Einfluss auf die Körperform und auf die in Richtung der größten Längsausdehnung verlaufende absolute Körpergröße, d.h. in der Hinsicht sind die ursprünglichen edelmetallfreien Aktivkohlekörper nicht verschieden von den erfindungsgemäßen bzw. im erfindungsgemäßen Verfahren daraus herstellbaren eine Oberflächenausstattung mit Silber und Ruthenium aufweisenden Aktivkohlekörpern. Die Oberflächenausstattung mit Silber und Ruthenium hat im Übrigen auch keinen Einfluss auf besagtes Aspektverhältnis.

Im Falle naturgemäß jeweils im Wesentlichen gleich geformter und im Wesentlichen auch gleich großer Aktivkohleformkörper liegt praktisch jeder der Aktivkohleformkörper (>99 % der Aktivkohleformkörper) mit seiner absoluten Körpergröße im Bereich von 400 bis 50000 µm, bevorzugt 500 bis 20000 µm, insbesondere >500 bis 10000 µm, zumindest soweit man dabei von möglichem Abrieb, zerbrochenen Aktivkohleformkörpern und/oder Größentoleranzen absieht. Wie für die Aktivkohlekörper allgemein schon gesagt, kann die absolute Körpergröße auch im Falle der Aktivkohleformkörper abhängig von ihrer Größenordnung durch mikroskopische oder visuelle Analyse bestimmt werden.

Die erfindungsgemäßen Aktivkohlekörper weisen eine Oberflächenausstattung mit Silber und Ruthenium auf. Wie schon gesagt, die die Oberflächenausstattung bildenden Silberspezies umfassen metallisches Silber und/oder Silberoxid und die Rutheniumspezies können insbesondere metallisches Ruthenium und/oder Rutheniumoxid umfassen. Mittels REM ist dabei erkennbar, dass die Silber- und die Rutheniumspezies auf inneren Oberflächen und dabei innerhalb des Bereichs des vorerwähnten Konzentrationsgradienten (innerhalb von Poren und/oder Hohlräumen innerhalb des Konzentrationsgradienten) und auf der äußeren Oberfläche der ursprünglich edelmetallfreien Aktivkohlekörper vorliegen und dabei beispielsweise eine diskontinuierliche Schicht und/oder kleine Inseln von Silberspezies respektive Rutheniumspezies ausbilden können und dabei mindestens zum Teil in Kontakt miteinander stehen. Für den Fachmann ist klar, dass das Silber und das Ruthenium andere Silberspezies und andere Rutheniumspezies als die vorerwähnten Spezies umfassen kann. Beispiele für andere Silberspezies und andere Rutheniumspezies umfassen entsprechende Hydroxide, Oxide, Halogenide und/oder Sulfide. Derartige Spezies können während der Durchführung des in der weiteren Folge beschriebenen erfindungsgemäßen Verfahrens oder im Anschluss daran gebildet werden, beispielsweise während Lagerung, Verwendung oder Weiterverarbeitung der erfindungsgemäßen eine Oberflächenausstattung mit Silber und Ruthenium aufweisenden Aktivkohlekörper.

Der durch Silber und Ruthenium gebildete Silber-plus-Ruthenium-Gewichtsanteil der erfindungsgemäßen Aktivkohlekörper kann in weiten Grenzen variieren, beispielsweise im Bereich von 0,05 bis 10 Gew.% (Gewichts-%), bevorzugt 0,1 bis 5 Gew.% betragen und zugleich kann das Silber: Ruthenium-Gewichtsverhältnis beispielsweise im Bereich von 1 bis 100 Gewichtsteilen Silber: 1 Gewichtsteil Ruthenium liegen. ICP-OES (Optische Emissionsspektrometrie mit induktiv gekoppeltem Plasma) kann zur Bestimmung des Silber-und Rutheniumgehaltes angewendet werden.

Die erfindungsgemäßen Aktivkohlekörper können eine BET-Oberfläche beispielsweise im Bereich von 100 bis 2000 m²/g aufweisen. Die BET-Oberfläche kann nach dem Verfahren von Brunauer, Emmet und Teller (BET-Verfahren gemäß DIN ISO 9277 : 2014-01,Kapitel 6.3.1, statisch-volumetrisches Messverfahren, verwendetes Gas: Stickstoff) bestimmt werden.

Die Erfindung betrifft auch ein Verfahren zur Herstellung der erfindungsgemäßen Aktivkohlekörper. Aus einem anderen Blickwinkel betrachtet kann das Verfahren auch verstanden werden als Verfahren zur Oberflächenausstattung von edelmetallfreien Aktivkohlekörpern mit Silber und Ruthenium. In dem erfindungsgemäßen Verfahren können die erfindungsgemäßen Aktivkohlekörper erhalten werden im Zuge einer Trocknung und einer unter nichtoxidierender Atmosphäre stattfindenden thermolytischen Behandlung von ursprünglich edelmetallfreien und mit wässrig gelösten Silber- und Rutheniumvorläufern imprägnierten Aktivkohlekörpern. Bei der thermolytischen Behandlung handelt es sich um eine Behandlung bei oder oberhalb der Thermolysetemperatur, d.h. der Mindest-Objekttemperatur, welche eine thermische Zersetzung des oder der Silber- und Rutheniumvorläufer unter nichtoxidierender Atmosphäre gewährleistet.

Der hierin wiederholt verwendete Begriff "nichtoxidierende Atmosphäre" bezeichnet eine reduzierende oder inerte Atmosphäre. Der Begriff "reduzierende Atmosphäre" bezeichnet eine Atmosphäre bestehend aus einem reduzierende Eigenschaften aufweisenden Gas wie beispielsweise Kohlenmonoxid und/oder insbesondere Wasserstoff oder eine Gasmischung aus einem solchen, reduzierende Eigenschaften aufweisenden Gas mit einem Inertgas wie beispielsweise Stickstoff, Argon und/oder Kohlendioxid; der Volumenanteil reduzierende Eigenschaften aufweisenden Gases innerhalb einer Gasmischung mit Inertgas kann beispielsweise im Bereich von 5 bis 10 Vol.% (Volumen-%) liegen. Der Begriff "inerte Atmosphäre" bezeichnet eine Atmosphäre bestehend aus einem Inertgas wie beispielsweise Stickstoff, Argon und/oder Kohlendioxid.

Das erfindungsgemäße Verfahren umfasst die Schritte:
(1) Imprägnieren edelmetallfreier Aktivkohlekörper mittels einer wässrigen Lösung mindestens eines Silbervorläufers und mittels einer wässrigen Lösung mindestens eines Rutheniumvorläufers oder bevorzugt mittels einer wässrigen Lösung sowohl mindestens eines Silbervorläufers als auch mindestens eines Rutheniumvorläufers unter Erhalt feuchter Aktivkohlekörper,
(2) Trocknen der in Schritt (1) erhaltenen feuchten imprägnierten Aktivkohlekörper, und
(3) thermolytische Behandlung der in Schritt (2) erhaltenen getrockneten Aktivkohlekörper unter nichtoxidierender Atmosphäre, wobei die Schritte (2) und (3) voneinander getrennt und dabei nacheinander oder bevorzugt als gemeinsamer Schritt (2+3) erfolgen können.

Bevorzugt wird im erfindungsgemäßen Verfahren eine reduzierende Atmosphäre als nichtoxidierende Atmosphäre verwendet.

In Schritt (1) des erfindungsgemäßen Verfahrens werden vorerwähnte edelmetallfreie Aktivkohlekörper mittels einer wässrigen Lösung mindestens eines Silbervorläufers und mittels einer wässrigen Lösung mindestens eines Rutheniumvorläufers oder mittels einer wässrigen Lösung sowohl mindestens eines Silbervorläufers als auch mindestens eines Rutheniumvorläufers imprägniert. Dabei werden feuchte imprägnierte Aktivkohlekörper erhalten, genauer gesagt, feuchte mit mindestens einem wässrig gelösten Silbervorläufer und mit mindestens einem wässrig gelösten Rutheniumvorläufer imprägnierte Aktivkohlekörper erhalten.

Bei den im erfindungsgemäßen Verfahren verwendeten Silbervorläufern handelt es sich um unter nichtoxidierender Atmosphäre thermisch zu metallischem Silber und/oder Silberoxid umfassenden Silberspezies zersetzbare Silberverbindungen. Beispiele für geeignete Silberverbindungen umfassen Silberacetat und bevorzugt Silbernitrat.

Bei den im erfindungsgemäßen Verfahren verwendeten Rutheniumvorläufern handelt es sich um unter nichtoxidierender Atmosphäre thermisch zu Rutheniumspezies, welche metallisches Ruthenium und/oder Rutheniumoxid umfassen können, zersetzbare Rutheniumverbindungen. Beispiele für geeignete Rutheniumverbindungen umfassen Rutheniumoxalat, Rutheniumacetat, Rutheniumnitrosyloxalat und bevorzugt Rutheniumnitrosylnitrat.

Besonders bevorzugt wird bei dem erfindungsgemäßen Verfahren eine Kombination von Silbernitrat und Rutheniumnitrosylnitrat als Kombination von Vorläuferverbindungen verwendet.

Das Imprägnieren kann mittels einer wässrigen Lösung mindestens eines Silbervorläufers und mittels einer wässrigen Lösung mindestens eines Rutheniumvorläufers durchgeführt werden, indem die beiden wässrigen Lösungen einmalig oder wiederholt und dabei zugleich oder in beliebiger Reihenfolge (zeitversetzt überlappend, alternierend oder nacheinander) eingesetzt werden, im letzteren Fall jeweils mit einem zwischen den einzelnen Imprägnierschritten stattfindenden Trockungsschritt. Bevorzugt jedoch wird mittels einer einzigen wässrigen Lösung sowohl mindestens eines Silbervorläufers als auch mindestens eines Rutheniumvorläufers gearbeitet; auch hier kann der Imprägniervorgang einmalig oder wiederholt mit Zwischentrocknung durchgeführt werden, bevorzugt einmalig.

Die wässrige oder die wässrigen Lösungen können einen Silbergehalt beispielsweise im Bereich von 0,3 bis 30 Gew.% respektive einen Rutheniumgehalt beispielsweise im Bereich von 0,3 bis 20 Gew.% aufweisen.

Der Fachmann orientiert sich am für die erfindungsgemäßen Aktivkohlekörper konkret gewünschten Silber- und Rutheniumgehalt bei der Entscheidung über Silber- und Rutheniumgehalt der verwendeten wässrigen Lösungen bzw. wässrigen Lösung und damit verbunden über die Anzahl von Imprägniervorgängen und/oder das zur Imprägnierung verwendete Volumen an wässriger Lösung. Bevorzugt wird er dabei mit wässriger Lösung/wässrigen Lösungen mit möglichst hoher Silber- respektive Rutheniumkonzentration und bei möglichst geringer Anzahl von Imprägniervorgängen arbeiten.

Der oder die eigentlichen Imprägniervorgänge können durch Tauchen, bevorzugt jedoch durch Sprühauftrag besagter wässriger Lösung oder Lösungen erfolgen. Beim Tauchen können die gesamten edelmetallfreien Aktivkohlekörper in einem Behälter mit betreffender wässriger Lösung komplett untergetaucht und danach von der Flüssigkeit abgetrennt, beispielsweise abgesiebt werden. Beim bevorzugten Sprühauftrag wird die Gesamtheit der edelmetallfreien Aktivkohlekörper kontinuierlich oder diskontinuierlich bewegt und durchmischt und währenddessen mit betreffender wässriger Lösung besprüht, beispielsweise unter Verwendung von Sprüheinrichtungen wie sie in der Beschichtungs- oder Lackiertechnik üblich sind. Das Durchmischen kann in einem unbewegten oder bewegten, beispielsweise rotierenden Behälter erfolgen. Im Falle eines unbewegten Behälters sind innerhalb des Behälters sich bewegende eine Durchmischung bewirkende Vorrichtungen aktiv. Im einfachsten Falle eines bewegten Behälters sind keinerlei interne eine Durchmischung bewirkende Vorrichtungen vorhanden; im Falle eines bewegten Behälters können intern unbewegte oder sich bewegende eine Durchmischung unterstützende oder bewirkende Vorrichtungen vorhanden bzw. aktiv sein.

Nach Abschluss des Imprägnierens erhält man besagte feuchte imprägnierte Aktivkohlekörper, d.h. ihr Erscheinungsbild ist nicht etwa nass, sondern sie sind frei fließ-, schütt- bzw. rieselfähig ohne untereinander anzuhaften.

Das erfindungsgemäße Herstellungsverfahren umfasst das Trocknen der feuchten imprägnierten Aktivkohlekörper während Schritt (2) und das thermolytische Behandeln der getrockneten Aktivkohlekörper unter nichtoxidierender Atmosphäre während Schritt (3). Das Trocknen und das thermolytische Behandeln können voneinander getrennt und dabei nacheinander oder bevorzugt als gemeinsamer Schritt (2+3) durchgeführt werden.

Das Trocknen bedeutet eine Befreiung von Wasser und gegebenenfalls vorhandenen weiteren flüchtigen Substanzen. Die feuchten imprägnierten Aktivkohlekörper können gegebenenfalls während des Trocknens bewegt werden. Im Allgemeinen wird während des Trocknens erwärmt und/oder Unterdruck angelegt, um Wasser und gegebenenfalls vorhandene weitere flüchtige Substanzen zu entfernen. Während des Trocknens kann bei einer Temperatur beispielsweise im Bereich von 40 bis 95 °C gearbeitet werden, dabei beispielsweise unterstützt mittels reduziertem Druck beispielsweise im Bereich von 200 bis 500 mbar.

In Schritt (3) werden die Silber- und Rutheniumvorläufer thermisch zersetzt. Dazu werden die nach Beendigung von Schritt (2) erhaltenen getrockneten Aktivkohlekörper einer thermolytischen Behandlung unter nichtoxidierender Atmosphäre unterworfen. Zu dem Zweck können die Aktivkohlekörper unbewegt oder bewegt auf eine Thermolysetemperatur beispielsweise im Bereich von 200 bis 1000 °C erhitzt werden, beispielsweise in einem statischen Ofen, einem Wirbelschichtreaktor oder einem Drehrohrofen; mit anderen Worten Schritt (3) des erfindungsgemäßen Verfahren kann diskontinuierlich oder in einer vorteilhaften Ausgestaltung bei Verwendung eines geeigneten Ofentyps wie beispielsweise eines Drehrohrofens auch kontinuierlich erfolgen.

Während Schritt (3) befindet sich eine nichtoxidierende Atmosphäre im Ofenraum. Zweckmäßig wird der Ofenraum während Schritt (3) mit dem nichtoxidierende Eigenschaften aufweisenden Gas gespült respektive durchströmt; der Gasstrom kann dabei auch dem Austrag von gasförmigen Zersetzungsprodukten dienen. Die nichtoxidierende Atmosphäre kann auch druckreduziert sein.

In einer ersten Variante des kombinierten Schrittes (2+3) werden die in Schritt (1) erhaltenen feuchten imprägnierten Aktivkohlekörper getrocknet und unter nichtoxidierender Atmosphäre thermolytisch behandelt. Dabei können die feuchten imprägnierten Aktivkohlekörper innerhalb eines Ofens bewegt oder unbewegt ein Temperaturprofil umfassend eine Trocknungstemperatur und eine höhere Thermolysetemperatur durchlaufen. Dies kann verwirklicht werden, indem ein Durchlaufofen mit einem ansteigenden, Trocknungstemperatur und Thermolysetemperatur umfassenden Temperaturgradienten durchlaufen wird oder indem in einem Ofen mit zeitlich gesteuertem Aufheiz- respektive Temperaturprogramm gearbeitet wird, welches zunächst Trocknungstemperatur und anschließend Thermolysetemperatur sicherstellt. Beispiele für verwendbare Ofentypen umfassen die schon vorerwähnten statischen Öfen, Wirbelschichtreaktoren und Drehrohröfen. So kann zunächst eine Trocknung der in Schritt (1) bereitgestellten wässrigen Suspension erfolgen, d.h. eine Befreiung von Wasser und gegebenenfalls vorhandenen weiteren flüchtigen Substanzen. Während des Trocknens kann bei einer Trocknungstemperatur beispielsweise im Bereich von 40 bis 95 °C gearbeitet werden. Nach beendeter Trocknung werden die Silber- und Rutheniumvorläufer thermisch zersetzt, indem sie unmittelbar ohne zwischenzeitliches Abkühlen weiter erhitzt werden auf Thermolysetemperatur beispielsweise im Bereich von 200 bis 1000 °C; d.h. die getrockneten Aktivkohlekörper werden einer thermolytischen Behandlung unterworfen. Besagte Trocknung als auch besagte sich daran unmittelbar anschließende Thermolyse erfolgen unter nichtoxidierender Atmosphäre.

Auch in einer zweiten Variante des kombinierten Schrittes (2+3) werden die in Schritt (1) erhaltenen feuchten imprägnierten Aktivkohlekörper getrocknet und unter nichtoxidierender Atmosphäre thermolytisch behandelt. Dabei können die Aktivkohlekörper bewegt oder unbewegt besagter Thermolysetemperatur beispielsweise im Bereich von 200 bis 1000 °C innerhalb eines Ofens ausgesetzt werden. Beispiele für verwendbare Ofentypen umfassen auch hier die schon vorerwähnten statischen Öfen, Wirbelschichtreaktoren und Drehrohröfen. Dabei werden die Silber- und Rutheniumvorläufer thermisch zersetzt. Trocknung und Thermolyse erfolgen hier praktisch zeitlich parallel bzw. überlappend. Auch hier erfolgen sowohl Trocknung als auch Thermolyse unter nichtoxidierender Atmosphäre.

Nach Beendigung von Schritt (3) oder jeder der Varianten des kombinierten Schrittes (2+3) erhält man die erfindungsgemäßen eine Oberflächenausstattung mit Silber und Ruthenium aufweisenden Aktivkohlekörper, entweder in Gestalt von Granalien oder in Gestalt von Formkörpern.

Die Erfindung betrifft auch die Verwendung der erfindungsgemäßen eine Oberflächenausstattung mit Silber und Ruthenium aufweisenden Aktivkohlekörper als Filtermaterial gegebenenfalls in Kombination mit edelmetallfreier Aktivkohle in Filtern für die Luftreinigung, insbesondere Abluft- oder Umluftreinigung beispielsweise im Lebensmittel- oder Küchenbereich oder insbesondere in Filtern für die Reinigung verkeimter Wässer, beispielsweise im Schwimmbadbereich, Haushaltsbereich, Sanitärbereich, Abwasserbereich, etc.. "Reinigung" schließt hier eine Entfernung von Keimen aus besagten Medien ein sowie deren Hemmung oder Abtötung im Filter bzw. im Filtermaterial. Ein Vorteil bei der Verwendung der erfindungsgemäßen eine Oberflächenausstattung mit Silber und Ruthenium aufweisenden Aktivkohlekörper ist, dass eine Verkeimung des Filtermaterials selber gehemmt wird, was die Langlebigkeit des Filtermaterials deutlich erhöht. Mit anderen Worten, die erfindungsgemäßen eine Oberflächenausstattung mit Silber und Ruthenium aufweisenden Aktivkohlekörper können als Filtermaterial in Filtern für die Luftreinigung oder in Filtern für die Reinigung verkeimter Wässer oder zum Schutz solcher Filtermaterialien oder damit ausgestatteter Filter vor Verkeimung verwendet werden. Ein weiterer Vorteil ist, dass mit den erfindungsgemäßen eine Oberflächenausstattung mit Silber und Ruthenium aufweisenden Aktivkohlekörpern ein höherer Durchsatz an zu reinigendem und zu entkeimendem Medium möglich ist als bei Verwendung des aus WO 2023/160837 A1 bekannten Materials.

### Ausführungsbeispiel 1 (Herstellung von mit 0,5 Gew.% Silber und 0,04 Gew.% Ruthenium ausgestatteten Aktivkohlegranalien):

In einem Pflugscharmischer wurden 99,5 kg Aktivkohlegranalien (Norit^{®}GCN 830) vorgelegt und bewegt. Mittels Sprühauftrag wurden 32,27 kg einer wässrigen Imprägnierlösung bestehend aus 1,29 kg Silbernitrat-Lösung (Silberanteil 38,8 Gew.%), 0,27 kg Rutheniumnitrosylnitrat-Lösung (Rutheniumanteil 18,8 Gew.%) und 30,71 kg VE-Wasser auf die bewegten und so durchmischten Aktivkohlegranalien aufgebracht. Die Menge der Imprägnierlösung wurde so gewählt, dass nach der Imprägnierung ein rieselfähiges Material vorlag. Im Anschluss wurden die imprägnierten Aktivkohlegranalien in einem Drehrohrofen in einem kontinuierlichen Verfahren bei einer Temperatur von 260 °C behandelt. Als Prozessgas wurde eine reduzierende Atmosphäre in Gestalt stetig das Innere des Drehrohrofens durchströmenden Formiergases (95 Vol.% N₂ / 5 Vol.% H₂) verwendet. Mittels ICP-OES wurde ein Silbergehalt von 0,5 Gew.% und ein Rutheniumgehalt von 0,04 Gew.% bezogen auf die Gesamtmasse der imprägnierten und getrockneten Aktivkohlegranalien, d.h. bei einer Restfeuchte von 0 Gew.% bestimmt. Die Bildung diskreter, diskontinuierlicher Inseln bestehend aus Silber- und Rutheniumspezies konnte durch REM nachgewiesen werden. Mittels FIB konnte ein Konzentrationsgradient der Silber- und Rutheniumspezies mit einer maximalen Eindringtiefe von 25 µm in die Aktivkohlegranalien verifiziert werden.

Die antimikrobielle Wirksamkeit wurde über ASTM E 2149 Tests bestätigt. Die Mikroorganismen wurden gemäß der BPR EFF Guidance List (Anhang 3, Tabelle 42) ausgewählt und umfassten *Staphylococcus aureus* (DSM 799), *Pseudomonas aeruginosa* (DSM 939), *Enterococcus hirae* (DSM 3320), *Escherichia coli* (DSM 682), *Escherichia coli A3* (DSM 110652) und *Enterococcus faecium Teltow* 11 (DSM 110643) mit einer Inokulumkonzentration von 2,0 · 10⁵ KBE/ml. Als Testmedium wurde hartes Wasser (gemäß EN 1276) ergänzt mit einer Verschmutzungskonzentration von 0,0005 % Hefeextrakt (gemäß EN 13623) verwendet. Um typische Umweltbedingungen zu simulieren, wurde die Inkubationstemperatur von 35 °C auf 15 °C reduziert, was der durchschnittlichen Temperatur von Leitungswasser entspricht. In allen Fällen konnte nach einer Inkubationszeit von 15 h eine Reduktion der Keimzahl um mehr als 99,9 % nachgewiesen werden (>Log 3).

## Patentansprüche

1. Aktivkohlekörper aufweisend (i) eine Oberflächenausstattung mit Silber und Ruthenium und (ii) eine in Richtung der größten Längsausdehnung verlaufende absolute Körpergröße im Bereich von 400 bis 50000 µm.

2. Aktivkohlekörper nach Anspruch 1 mit einem Aspektverhältnis im Bereich von 0,1 bis 1.

3. Aktivkohlekörper nach Anspruch 1 oder 2, wobei die Oberflächenausstattung mit Silber und Ruthenium bedeutet, dass die Silber- und Rutheniumkonzentration auf der äußeren Oberfläche der Aktivkohlekörper am höchsten ist und einen nicht tiefer als bis zu 50 µm ins Innere der Aktivkohlekörper hineinreichenden abnehmenden Gradienten aufweist.

4. Aktivkohlekörper nach einem der vorhergehenden Ansprüche, wobei die eine Oberflächenausstattung mit Silber und Ruthenium aufweisenden Aktivkohlekörper aus Aktivkohle als Trägermaterial für die Oberflächenausstattung und aus die Oberflächenausstattung mit Silber und Ruthenium bildenden Silberspezies und Rutheniumspezies bestehen.

5. Aktivkohlekörper nach einem der vorhergehenden Ansprüche, wobei es sich bei den Aktivkohlekörpern um Aktivkohlegranalien oder um Aktivkohleformkörper handelt.

6. Aktivkohlekörper nach einem der vorhergehenden Ansprüche, wobei der Silber-plus-Ruthenium-Gewichtsanteil der Aktivkohlekörper im Bereich von 0,05 bis 10 Gew.% beträgt.

7. Aktivkohlekörper nach Anspruch 6, wobei das Silber: Ruthenium-Gewichtsverhältnis zugleich im Bereich von 1 bis 100 Gewichtsteilen Silber: 1 Gewichtsteil Ruthenium liegt.

8. Aktivkohlekörper nach einem der vorhergehenden Ansprüche, wobei die Aktivkohlekörper eine BET-Oberfläche im Bereich von 100 bis 2000 m²/g aufweisen.

9. Verfahren zur Herstellung von Aktivkohlekörpern nach einem der vorhergehenden Ansprüche umfassend die Schritte:
(1) Imprägnieren edelmetallfreier Aktivkohlekörper aufweisend eine in Richtung der größten Längsausdehnung verlaufende absolute Körpergröße im Bereich von 400 bis 50000 µm mittels einer wässrigen Lösung mindestens eines Silbervorläufers und mittels einer wässrigen Lösung mindestens eines Rutheniumvorläufers oder mittels einer wässrigen Lösung sowohl mindestens eines Silbervorläufers als auch mindestens eines Rutheniumvorläufers unter Erhalt feuchter Aktivkohlekörper,
(2) Trocknen der in Schritt (1) erhaltenen feuchten imprägnierten Aktivkohlekörper, und
(3) thermolytische Behandlung der in Schritt (2) erhaltenen getrockneten Aktivkohlekörper unter einer reduzierenden oder inerten Atmosphäre, wobei die Schritte (2) und (3) voneinander getrennt und dabei nacheinander oder bevorzugt als gemeinsamer Schritt (2+3) erfolgen können.

10. Verfahren nach Anspruch 9, wobei die edelmetallfreien Aktivkohlekörper ein Aspektverhältnis im Bereich von 0,1 bis 1 besitzen.

11. Verfahren nach Anspruch 9 oder 10, wobei es sich bei den edelmetallfreien Aktivkohlekörpern um Aktivkohlegranalien oder um Aktivkohleformkörper handelt.

12. Verfahren nach einem der Ansprüche 9 bis 11, wobei der mindestens eine Silbervorläufer ausgewählt ist aus Silberacetat und Silbernitrat und wobei der mindestens eine Rutheniumvorläufer ausgewählt ist aus der Gruppe bestehend aus Rutheniumoxalat, Rutheniumacetat, Rutheniumnitrosyloxalat und Rutheniumnitrosylnitrat.

13. Verfahren nach Anspruch 12 mit einer Kombination von Silbernitrat und Rutheniumnitrosylnitrat.

14. Verfahren nach einem der Ansprüche 9 bis 13, wobei das Imprägnieren durch Tauchen oder durch Sprühauftrag erfolgt.

15. Verfahren nach einem der Ansprüche 9 bis 14, wobei die Aktivkohlekörper unbewegt oder bewegt auf eine Thermolysetemperatur im Bereich von 200 bis 1000 °C erhitzt werden.

16. Verwendung von eine Oberflächenausstattung mit Silber und Ruthenium aufweisenden Aktivkohlekörpern nach einem der Ansprüche 1 bis 8 oder hergestellt nach einem Verfahren eines der Ansprüche 9 bis 15 als Filtermaterial in Filtern für die Luftreinigung oder in Filtern für die Reinigung verkeimter Wässer oder zum Schutz solcher Filtermaterialien oder damit ausgestatteter Filter vor Verkeimung.
